# EUROPEAN PATENT SPECIFICATION

(11) **EP 2 644 758 B1**
(45) Date of publication and mention of the grant of the patent: **10.12.2014**
(21) Application number: 12162038.9
(22) Date of filing: 29.03.2012
(51) Int. Cl.: D01F 1/10, D01F 9/00, D01F 9/17, D06M 13/127, D06M 13/358, D06M 13/395, C07G 1/00, D06M 101/04

(54) **Stabilization of lignin carbon fibers with crosslinkers**
Stabilisation von Lignin-Kohlenstofffasern mit Vernetzungsmitteln
Stabilisation de fibres de carbone de lignine avec des agents de réticulation

(43) Date of publication of application: 02.10.2013
(73) Proprietor: Honda R&D Europe (Deutschland) GmbH, 63073 Offenbach (DE)
(72) Inventor: Poeppel, Artur, 63571 Gelnhausen (DE); Frank, Dr. Erik, 73770 Denkendorf (DE)
(74) Representative: Rupp, Christian

(56) References cited:
- WO-A1-97/24362
- WO-A1-2012/038259
- DE-A1- 10 057 910
- US-A1- 2002 065 400
- US-A1- 2008 318 043
- US-A1- 2012 003 471
- KADLA, J.F. ET AL: "LIGNIN-BASED CARBON FIBERS FOR COMPOSITE FIBER APPLICATIONS", CARBON, vol. 40, 2002, pages 2913-2920, XP002684198, OXFORD, ENGLAND
- QING SHEN ET AL: "Lignin-Based Activated Carbon Fibers and Controllable Pore Size and Properties", JOURNAL OF APPLIED POLYMER SCIENCE, JOHN WILEY & SONS, INC, US, vol. 121, no. 2, 15 July 2011 (2011-07-15) , pages 989-994, XP007918131, ISSN: 0021-8995, DOI: 10.1002/APP.33701 [retrieved on 2011-02-25]
- URAKI Y ET AL: "Preparation of Carbon Fibres from organosolv Lignin obtained by aqueous acetic acid pulping", HOLZFORSCHUNG : INTERNATIONAL JOURNAL OF THE BIOLOGY, CHEMISTRY, PHYSICS AND TECHNOLOGY OF WOOD, WALTER DE GRUYTER GMBH & CO., BERLIN, DE, vol. 4, 1 January 1995 (1995-01-01), pages 343-350, XP009163127, ISSN: 0018-3830, DOI: 10.1515/HFSG.1995.49.4.343

## Description

### Background

Carbon fibers are known as the most important high performance fibers for making lightweight and stiff composites (CFC). Carbon fibers are prepared by using precursors from cellulosics, pitch, and preferably from polyacrylnitrile, which is the most widly used precursor for making carbon fibers on a commercial scale. None of these precursor systems meets the following three criteria at the same time: good mechanical properties, a high carbon yield for economical processing, low production costs. Accordingly, the disadvantages of these precursor systems impair or prevent the use of carbon fibers in the mass production of automotive vehicles.

Recycled polymers from renewable resources have advantages when used as carbon fiber precursors in automotive applications. They are inexpensive and available in unlimited quantities from biomass. Lignin, for example, is the most abundant biopolymer in nature, where it us used in a matrix with cellulosic structures for stabilizing the wood of trees. Lignin is an amorphous polymer with a high content of aromatic groups. It is produced as a byproduct during the production of paper, and will be even available in the future as byproduct from bio-ethanol production facilities.

Making carbon fibers from lignin has a long history in the last thirty years. Early investigations on lignosulphonates based carbon fibers (called Kayacarbon) were reported in the 1970s and resulted in the establishment of a pilot-plant by Nippon Kayaku Co. However, the quality of the product was not satisfying at that time.

Lignin has some advantages over polyacrylonitrile (PAN) as precursor material. During its production environmental emissions from toxic solvents and nitrogen containing pyrolysis products like ammonia or hydrogen cyanide can be avoided. This makes a lignin based production more convenient for modern industrial production methods. Lignin is much more independent of the limited gas and oil resources which are required for the production of polyacrylonitrile. Furthermore, lignin can be melt-spun, which is typically cheaper than the wet-spinning reqired for polyacrylnitrile. US 3,461,082 is directed to method for producing carbonized lignin fiber involving the mixture of large polymers and lignin followed by a long lasting thermal treatment.

US 3,723,609 describes a process for the production of carbon fibers involving the mixture of high molecular weight linear polymers. US 5,344,921 is directed to a method for manufacturing lignin for carbon fiber spinning where the lignin is phenolated. US 2007/0142225 relates to activated carbon fibers and engineered forms from renewable resources wherein the lignin is "activated" by the use of activation agents which change the carbon structure. This published application does not mention the crosslinking of fibers. US 2008/0318043 is directed to carbon fibers from kraft softwood lignin where lignin is stabilized by acetylation. None of the cited references discloses that addition of crosslinker to lignin followed by a thermal treatment can be used to stabilize carbon fibers.

The disadvantages of the methods of the prior art are that they usually require an elongated thermal treatment where the temperature can only be increased at low rates (less than 12°C/h with an endpoint of 250°C). The newly developed crosslinking method overcomes the disadvantages of the prior art.

### Summary

The invention relates to a method for stabilizing lignin fibers by crosslinking lignin within lignin fibers with a crosslinker. The method can either use unspun unstabilized lignin (a lignin dope) as starting material or already prepared unstabilized lignin fibers as starting material.

When using unspun lignin as starting material the method comprises incubating a solution of unspun lignin with a crosslinker at a temperature where no crosslinking occurs, then spinning lignin fibers from the solution, subsequently thermally treating the obtained fibers in a first treatment step at a constant temperature said temperature allowing crosslinking of lignin with the crosslinker, and thereby obtaining a stabilized lignin fiber.

When using lignin fibers as starting material the method comprises providing a fiber of lignin, then incubating the fiber of lignin with a solution comprising a crosslinker at a temperature where no crosslinking occurs, subsequently thermally treating the obtained fibers in a first thermal treatment step at a constant temperature said temperature allowing crosslinking of lignin with the crosslinker, and thereby obtaining a stabilized lignin fiber.

The method can comprise a further step comprising thermally treating the fibers in a second thermal treatment step by gradually increasing the temperature to a temperature between 240°C and 260°C.

Preferably, the crosslinker can be selected from the group consisting of
a) a molecule having formula I 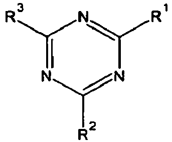 wherein R¹ and R² are independently selected from the group consisting of Cl, Br, and F; wherein R³ renders the molecule water soluble;
b) formaldehyde;
c) isocyanate;
d) hexamethylene diisocyanate; and
e)hexamethoxymethylmelamine;

The crosslinker can have formula 1 and R³ can be selected from the group consisting of Cl, Br, F, Na, OH, H(CH₂0)ₙ, H(C₂H₄O)ₙ, with n from 1 to 10, preferably 1.

R¹ and R² of formula 1 can be Cl, and R³ can be Cl, H(CH₂O)ₙ, or H(C₂H₄O)n, with n from 1 to 10, preferably 1.

The crosslinker can have a concentration of between 0.01% and 10%, 0.05% and 5%, 0.075% and 1.25%, 0.1% and 1.0% or 0.5 % during the incubation step when using unspun lignin as starting material.

The crosslinker can have a concentration of between 6.5% and 11%, 7.5% and 10%, 8% and 10%, or of 8% during the incubation step when using lignin fibers as starting material.

The incubation step can be performed at a temperature of between 0°C and 20°C, 0°C and 15°, 0°C and 10°C, 1°C and 8°C, 2°C and 6°C, 3° and 5°C, or at a temperature of 4°C.

The first thermal treatment step can be performed at a temperature of between 20°C and 60°C, 30°C and 50°C, 35° and 45 °C, or at 40°C.

The first thermal step can be performed for between 10 and 60 min, 15 and 50 min, 20 and 40 min, or for 30 min.

In a preferred embodiment, the first thermal treatment step is performed under salt free conditions.

The first thermal treatment step can be followed by a drying step or the first thermal treatment step is performed concurrently with a drying step. The lignin of the starting material can be prepared by the sulfite-, sulfate-, soda- or organosolv method. Material obtained by the organosolv method is preferred.

In the course of the second thermal treatment step the temperature can be raised at a rate of 1-5K/min and subsequently maintained at a temperature of 240° to 260°C for 30 min to 90 min, 50 min to 70 min, or 60 min.

The method of the invention can also comprise a further step comprising the carbonization of the stabilized lignin fibers and also relates to carbon fibers obtainable by this method.

### Brief description of the figures

Fig. 1 outlines the different possible methods for the stabilization of lignin fibers.
Fig. 2 illustrates the reaction of cyanurchloride with the lignin polymer in a simplified way.
Fig. 3 shows a rheological sweep test of a reaction of cyanurchloride with lignin polymer in acetone. A: storage Modulus; ▼: lost Modulus; ◆: complex Viscosity.
Fig. 4 presents an image of lignin based carbon fiber; the precursor fiber was stabilized with cyanurchloride and carbonized with a temperature gradient of 2 K/min.
Fig. 5 shows the stability of cyanuric chloride (CC) in relation to temperature over time.

### Definitions

**Lignin** or raw lignin can be soda, sulfite, sulfate (kraft) or organosolv lignin that has not been spun to fibers. Lignin is known in the art and is an amorphous polymer with a high content of aromatic groups. Lignin contains reactive hydroxyl groups.

A **stabilized lignin fiber** is a fiber spun from lignin that has been made more resistant against heat and solvents than raw lignin by the use of chemical or physical means.

**Spinning** describes the process by which an originally powdery starting substance is extruded to yield filaments that are spun into a fiber.

**Melt-spinning** is a spinning process by which the starting material is heated above its melting point to yield a homogenous mass that is extruded to filaments which are spun to fibers.

A **crosslinker** is a compound which has functional groups that can covalently react with two corresponding groups of one or more further compounds. A crosslinker in the sense of the invention is a crosslinker that covalently reacts with at least two or two hydroxyl-groups of lignin. The crosslinker can have one, two, three or at least two functional groups. **Carbonization** is a process by which organic material is converted into carbon. There are several methods available. One method involves the heating of the lignin fiber to a temperature of 1200°C under an oxygen-free atmosphere or in the presence of a protective gas. A protective gas is nitrogen.

**Carbon fibers** are fibers consisting of one or several filaments (monofil or multifilament lignin fibers). The filaments contain carbon in a graphite-like structure. A multifilament lignin fiber consists of several filaments (10-24000). A fiber can have a diameter of between 5 and 8 µm.

### Detailed description of the invention

The section headings serve to clarify the subject matter and should not be interpreted to limit the subject matter. If ranges of values are disclosed each individual value is considered to be covered by the range, in particular, each integer number. If not noted otherwise, values in % relate to weight/weight (w/v) values.

### Basic concept of invention

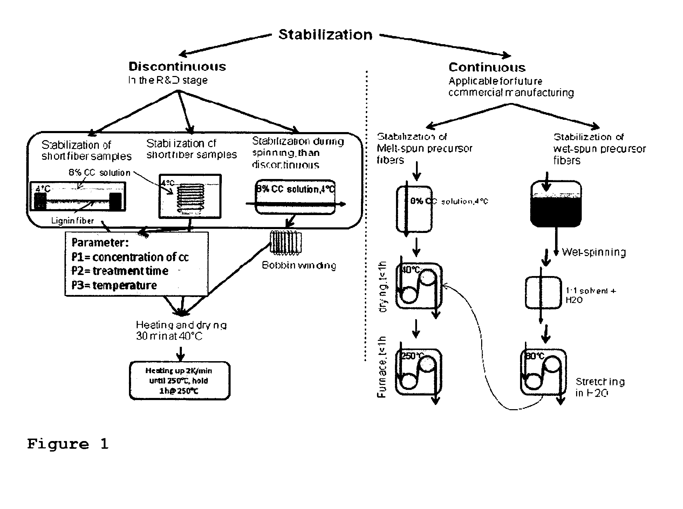

The object of the invention is to provide lignin fibers with an increased stability compared to the lignin fibers of the prior art. The inventors have surprisingly found that covalently crosslinking the lignin increases the resistance of the lignin containing fibers against solvents and heat. An overview over the possible methods is provided in figure 1.

In a first step, which could be called incubation step, the crosslinker can be added to already prepared lignin fibers. In this case the solution containing the cross linker can penetrate the fibers thereby allowing the lignin throughout the fiber to get into contact with the crosslinker. Alternatively, the solution comprising the crosslinker is added to the dough (unspun lignin) from which fibers are spun and thoroughly mixed. The dough which now contains the solution with the crosslinker can then be spun to fibers. In both cases the crosslinkers are in proximity to the hydroxyl groups of the lignin.

This incubation process is performed at a temperature where the crosslinker is not degraded and is not yet reactive, i.e. not yet crosslinking the lignin.

In the next step, the reaction of the crosslinker with the lignin is activated by increasing the temperature to a value where reaction of the crosslinker with the lignin occurs. This step may be called a first thermal treatment step. The conditions are chosen to achieve efficient crosslinking within the filaments. The combination of the incubation and the first thermal treatment step acts as first stabilization or pre-stabilization step.

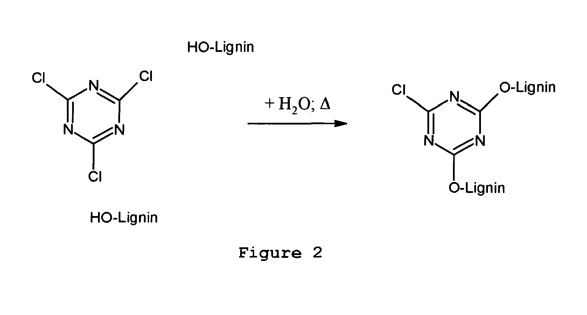

Figure 2 shows the principle of the crosslinking reaction with cyanurchloride as an example.

An even further improvement of the method resides in the use of a solution comprising no salt or preventing the formation of salt. This goal can be achieved by adapting the pH to a value where no salt formation occurs. Alternatively, a solution containing a crosslinker that contains no ions, in particular, Na-ions.

This first thermal treatment yields the fibers containing the crosslinked and thereby pre-stabilized lignin fibers.

This step can be followed by one or more optional washing steps. The washing step can be performed with water.

The obtained stabilized lignin fibers can be further stabilized by a further (second) thermal treatment which involves gradually increasing the temperature of fibers from room temperature to about 250°C. This step can be performed at a surprisingly high rate of above 120°C/h with an endpoint of 250°C.

The stabilization is considered to be successful when in the case of multifilament fiber the filaments remain separated after this step. If the surface of the filaments melts and some or all of the filaments stick to each other the stabilization has not been achieved.

Subsequently, the obtained lignin fibers can be carbonized by conventional carbonization methods.

The lignin which is used to prepare the fibers can be prepared by the sulfite-, sulfate-, soda- or organosolv method, the organosolv method being preferred because it prevents the incorporation of salt into the fibers during the production of the fibers.

### Preparation of lignin fibers

Methods for the preparation of lignin fibers from raw lignin are known. For example, fiber can be prepared from organosolv lignin by solving granulated raw lignin in an organic solvent, for example, acetone. The lignin is then precipitated in water and then dried in a vacuum furnace in a first step for 24 h at room temperature, and then drying continues at a temperature in the range of 40-120°C, preferably at a temperature above 100°C until the solvent content was below 1%. The granulated lignin is then molten (e.g. in a piston spinning device) and melt-spun by spinnerets. The lignin can be melt-spun to multifilament fibers. The fibers can contain 30-100 filaments with 200 µm to 300 µm hole sizes. The obtained fibers can be winded as endless fibers on bobbins with winder speeds from 50 to 150 m/min. From the bobbins the fibers can be unwinded.

### Crosslinker

The crosslinker is a crosslinker that is suitable to covalently crosslink two or more hydroxyl groups of lignin. The crosslinker can be hydrophobic if organosolv lignin is used. The crosslinker can be cyanuric chloride or one of its derivates; formaldehyde; isocynate; hexamethylene diisocyanate; and hexamethoxymethylmelamine. In a particular embodiment the crosslinker is a molecule having the formula 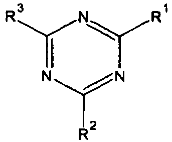 wherein R¹ and R² are independently selected to be a halogen, or from the group consisting of Cl, Fl, and Br; and wherein R³ renders the molecule water soluble. R³ is selected from the group consisting of Cl, Fl, Br, I, Na, OH, H(CH₂0)ₙ, H(C₂H₄O)ₙ, with n from 1 to 10, preferably 1. R¹ and R² are preferably Cl. R³ can be Cl or H(CH₂0)ₙ, H(C₂H₄O)ₙ, with n from 1 to 10, preferably 1. R³ can be Cl or methoxy.

In particular, the crosslinker can be formaldehyde, 2-sodium-4,6-dichloro-1,3,5-triazine, or 2,4-dichloro-6-methoxy-1,3,5-triazine.

### Stabilization of melt-spun lignin fibers

In one embodiment a fiber of lignin is provided, and incubated in a solution comprising a crosslinker under conditions where no crosslinking occurs, and then thermally treated allowing crosslinking of lignin with the crosslinker. The treatment can occur at a constant temperature. Thereby, a stabilized lignin fiber is obtained. The left half of figure 1 illustrates the different discontinuous stabilization methods.

The fibers to be stabilized can be provided as cut longitudinal pieces (a), on ready-spun bobbins (b), or as uncut fibers (endless fibers) (c). The fibers can be melt-spun lignin fibers.

In the case of (a) the fibers can have a length of several centimeters (1-30 cm) and can be monofil or multifilament fibers. The fibers can be fixed on a support or sample supply, for example, in a ceramic sample supply. Fixation of the fibers to the support or supply can be performed with an adhesive.

In the case of (b) the fibers are winded on a water resistant and temperature resistant (above 250°C) bobbin.

In the case of (c) the solution containing the crosslinker is applied to the lignin fiber with the aid of a nozzle or application finger and subsequently winded on a water resistant and temperature resistant (above 250°C) bobbin.

In the case of (a) or (b) the support, supply, or bobbin to which the fiber is attached is then inserted into a container or bath containing the solution comprising the crosslinker and the fiber is fully immersed.

The fibers which have brought into contact with the crosslinker either method (a), (b), or (c) can then be subjected to the first thermal treatment step.

The crosslinker can have a concentration of between 6.5 and 11 % (w/v), 7.5 and 10 % (w/v), 8 and 10, or of 8 % (w/v) during the incubation steps.

The incubation step can be performed at a temperature of between 0°C and 20°C, 0°C and 15°, 0°C and 10°C, 1°C and 8°C, 2°C and 6°C, 3° and 5°C, or at a temperature of 4°C.

Any available means can be used to thermally treat the lignin, like an incubator, a furnace, or an oil bath.

The first thermal treatment step can be performed at a temperature of between 20°C and 80°C, 35°C and 55°C, 40°C and 50°C, 35°C and 45 °C, 45°C and 55°C or at 40°C or at 50°C.

The thermal treatment step which effects the cross linking is performed for between 10 and 120 min, 15 and 50 min, 20 and 40 min, or for 30 min.

The solution containing the crosslinker can be a salt free solution.

The pH of the solution can be acid (below 7, preferably 1-5) during the incubation step.

The pH of the solution can be basic (above 7), in particular, during the first thermal treatment step. Preferably, the pH of the solution is above 8, 9, or 10.

In a particular embodiment, the incubation step is performed with cyanurchloride derivatives of the 3,5-dichloro-triazine type (trichlorotriazine) in water at a pH of less than 5 and a temperature of 0°C-1°C. Under these conditions 1-hydroxy-3,5-dichloro-triazine is formed. Then the pH is adapted to be between 5 and 9 while the temperature is maintained between 10°C and 40°C. Under these conditions a hydroxyl group of lignin can attack the position 3 of the 1-hydroxy-3,5-dichloro-triazine and replace the chloro-group. Further increasing the temperature to above 50°C and adapting the pH to above 10 allows a nucleophilic attack on position 5 thereby crosslinking the lignin to the crosslinker.

The pH can be rendered basic by the addition of ammonia or another base.

In a particular embodiment, formaldehyde in water can be used as the crosslinker. The pH of the solution can be between 0.5 and 1.5 or 1.0. The pH can be adjusted by any suitable acid, for instance, HCl. The first thermal treatment step can be performed in a temperature range between 30°C and 50°C, 35°C and 45°C, or 40°C. The first thermal treatment step can be performed between for 45 min to 75 min, 50 min to 70 min, or 60 min.

The first thermal treatment step (crosslinking step) can be followed by a washing step with, e.g. water. Subsequently, a drying step can be performed or the first thermal treatment step can be performed concurrently with a drying step.

The solution comprising the crosslinker can be removed after the crosslinking step. After the removal the fibers can be dried for 1-24 h in normal air at atmospheric pressure.

The dry stabilized lignin fibers can undergo an additional (second thermal treatment) step for stabilizing the fibers. This step comprises thermally treating the fibers by gradually increasing the temperature to a temperature above the temperature used in the first thermal treatment step. The starting temperature can be room temperature, or 20-45°C, 21-30°C, or 22-25°C, or 22°C. The stabilized fiber can be heated to a temperature of 240° to 260°C or 250°C at a rate of 1-5K/min, 2-3K/min, or 2K/min and subsequently maintaining a temperature of 240° to 260°C, 245°C to 255°C, or 250°C for 30 min to 90 min, 50 min to 70 min, or 60 min.

The dry fibers can be heated in any suitable heating device, like a furnace or incubator. The furnace or incubator can contain different heating zones in the range of 20°C to 250°C, 50°C to 250°C, preferably three zones with 80°C, 150°C, and 250°C.

### Stabilization of melt-spun fibers in a continuous process

The stabilization of lignin fibers in a continuous process is illustrated by the right half of figure 1 labeled "Continuous".

We will first describe the method which stabilized already prepared lignin fibers which is illustrated in the left half of the "Continuous" section of figure 1(d).

In embodiment (d), melt-spun lignin fiber can be driven though a unit that comprises the crosslinking solution where the incubation with the crosslinking solution occurs.

The crosslinker can have a concentration of between 6.5 and 11 % (w/v), 7.5 and 10 % (w/v), 8 and 10, or of 8 % (w/v) during the incubation steps. The incubation step can be performed at a temperature of between 0°C and 20°C, 0°C and 15°, 0°C and 10°C, 1°C and 8°C, 2°C and 6°C, 3° and 5°C, or at a temperature of 4°C. The solution containing the crosslinker can be a salt free solution.

The pH of the solution can be basic (above 7). Preferably, the pH of the solution is above 8, 9, or 10.

The fiber now impregnated with the crosslinking solution can be driven into a second unit where the thermal treatment effecting the crosslinking occurs. The second unit is thus a heating device, e.g. a (first) continuous furnace.

The first thermal treatment step can be performed at a temperature of between 20°C and 80°C, 35°C and 55°C, 40°C and 50°C, 35°C and 45 °C, 45°C and 55°C or at 40°C or at 50°C.

The thermal treatment step which effects the cross linking is performed for between 10 and 60 min, 15 and 50 min, 20 and 40 min, or for 30 min.

The first thermal treatment step (crosslinking step) can be followed by a washing step with, e.g. water in a further unit. Subsequently, a drying step can be performed or the first thermal treatment step can be performed concurrently with a drying step.

In a particular embodiment, formaldehyde in water can be used as the crosslinker. The pH of the solution can be between 0.5 and 1.5 or 1.0. The pH can be adjusted by any suitable acid, for instance, HCl. The first thermal treatment step can be performed in a temperature range between 30°C and 50°C, 35°C and 45°C, or 40°C. The first thermal treatment step can be performed between for 45 min to 75 min, 50 min to 70 min, or 60 min.

The dry stabilized lignin fibers can undergo an additional (second thermal treatment) step for stabilizing the fibers.

This step comprises thermally treating the fibers by gradually increasing the temperature to a temperature above the temperature used in the crosslinking step. The step involves driving the fiber through a further heating, e.g. a (second) furnace. The starting temperature can be room temperature, or 20-45°C, 21-30°C, or 22-25°C, or 22°C. The stabilized fiber can be heated to a temperature of 240° to 260°C or 250°C at a rate of 1-5K/min, 2-3K/min and maintaining a temperature of 240°C to 260°C, 245°C to 255°C, or 250°C for 30 min to 90 min, 50 min to 70 min, or 30 to 60 min. The residence time in the furnace can be between 0.5 h and 4 h.

The furnace can comprise temperature zones in the range of 20°C to 250°C, 50°C to 250°C, preferably three zones with 80°C, 150°C, and 250°C. The residence time in the furnace can be between 0.5 h and 4 h. The second furnace can be a furnace with separate temperature zones in the range of 20°C to 250°C, 50°C to 250°C, preferably three zones with 80°C, 150°C, and 250°C. Alternatively, the second thermal treatment is performed with several furnaces which have different temperatures. The temperature in these several furnaces can be in the range of 20°C to 250°C, 50°C to 250°C. Preferably three furnaces with 80°C, 150°C, and 250°C are used. The total residence time in the furnace can be between 0.5 h and 4 h.

An alternative embodiment is illustrated is the section on the very right side of figure 1(d).

The crosslinker is added directly to the fiber dope before the spinning of the dope to the fibers is initiated. A dope for wet-spinning is provided which comprises lignin and a crosslinker. The dope comprises 40-60% lignin, 45-55% lignin, or 50% lignin in a solvent. The solvent can be any solvent that permits the complete solvation of the lignin. In case of organosolv lignin the solvent is an organic solvent. Preferred organic solvents are acetone, dimethylamine (DMA), or dimethylformamide (DMF). In case of water soluble lignin any suitable aqueous solution may be used. The solution undergoes stirring until the lignin is solubilized. Preferably, the solubilization occurs at room temperature. The viscosity of the solution can be between 70 and 90 Pa*s, 75 and 85 Pa*s, or 80 Pa*s. Viscosity can be adjusted by adding or removing solvent. Removal of solvent can be effected by applying a vacuum. The vacuum can be applied by an evaporator, preferentially a rotary evaporator. The crosslinker can have a concentration of between 0.01 and 10 % (w/v), 0.05 and 5 % (w/v), 0.075 and 1.25, 0.1 and 1.0% or 0.5 % during the incubation step. The incubation step can be performed at a temperature of between 0°C and 20°C, 0°C and 15°, 0°C and 10°C, 1°C and 8°C, 2°C and 6°C, 3° and 5°C, or at a temperature of 4°C.

The dope can be salt free.

The pH of the solution can be basic (above 7). Preferably, the pH of the solution is above 8, 9, or 10.

In the next step the dope is spun by wet-spinning in a coagulation bath comprising the solvent and water. The ratio of the solvent and the water will vary depending on the desired characteristics of the spun fiber. In preferred embodiments the ratio solvent:water is 1.1:0.9, 0.9:1.1, or preferably 1:1. The crosslinker can be hydrophobic if organosolv lignin is used and will then remain in the produced coagulated lignin fiber.

Then the obtained fiber can optionally be stretched in a drawing bath. The temperature can be between 70°C and 90°C or preferably 80°C. The time period in the drawing bath is short enough to avoid degradation of the crosslinker. Preferentially less than 20%, 10% 1%, 0.1% is degraded or no crosslinker is degraded. The skilled person can reduce the time period according to the degradation characteristics of the cross linker. The time period in the drawing bath can be less than 5, 3, 3, 1, or 0.5 min.

The fiber can then be driven into a further heating unit where the thermal treatment effecting the crosslinking occurs. The further unit is thus a heating device, e.g. a (first) continuous furnace.

The first thermal treatment step can be performed at a temperature of between 20°C and 80°C, 35°C and 55°C, 40°C and 50°C, 35°C and 45 °C, 45°C and 55°C or at 40°C or at 50°C.

The thermal treatment step which effects the cross linking is performed for between 10 and 60 min, 15 and 50 min, 20 and 40 min, or for 30 min.

The first thermal treatment step (crosslinking step) can be followed by a washing step with, e.g. water in a further unit. Subsequently, a drying step can be performed or the first thermal treatment step can be performed concurrently with a drying step.

The dry stabilized lignin fibers can undergo an additional (second thermal treatment) step for stabilizing the fibers. This step comprises thermally treating the fibers by gradually increasing the temperature to a temperature above the temperature used in the crosslinking step. The step involves driving the fiber through a further heating, e.g. a (second) furnace. The starting temperature can be room temperature, or 20-45°C, 21-30°C, or 22-25°C, or 22°C. The stabilized fiber can be heated to a temperature of 240° to 260°C or 250°C at a rate of 1-5K/min, 2-3K/min and maintaining a temperature of 240°C to 260°C, 245°C to 255°C, or 250°C for 30 min to 90 min, 50 min to 70 min, or 30 to 60 min. The residence time in the furnace can be between 0.5 h and 4 h.

The furnace can comprise temperature zones in the range of 20°C to 250°C, 50°C to 250°C, preferably three zones with 80°C, 150°C, and 250°C. The residence time in the furnace can be between 0.5 h and 4 h. The second furnace can be a furnace with separate temperature zones in the range of 20°C to 250°C, 50°C to 250°C, preferably three zones with 80°C, 150°C, and 250°C. Alternatively, the second thermal treatment is performed with several furnaces which have different temperatures. The temperature in these several furnaces can be in the range of 20°C to 250°C, 50°C to 250°C. Preferably three furnaces with 80°C, 150°C, and 250°C are used. The total residence time in the furnace can be between 0.5 h and 4 h.

### Carbonization

The method of the invention can also comprise a further step directed to the carbonization of the stabilized lignin fibers. The step comprises heating the fiber from 250°C to 1200°C in an oxygen-free atmosphere, preferably under nitrogen gas, even more preferably under flowing nitrogen gas. The heating rate can be 1-10 K/min, preferably 1-3 K/min. The fiber can be under tension.

### Examples

### Example 1: Testing available lignins with the cyanurchloride stabilization method

Cyanurchloride treatment by wet impregnation was tested on all available lignins (HWOL= hard wood organosolv lignin, SWKL = soft wood kraft lignin, HWKL=hard wood kraft lignin). Pre-tests show, that treatment with a temperature over the glass point of the HWOL will solve parts of the material near the surface of the fibers. So, temperatures below the glass points are needed for the cyanurchloride treatment. In the experiments 40, 50, and 60°C were selected, and treatment times of 30, 60, and 180 min. All available lignins SWKL, HWKL, HWOL were treated with water solution of sodium cyanurchloride (commercial 8% solution of 2-sodium-4,6-dichloro-1,3,5-triazine / Alzchem Trostberg GmbH). Results are in table 1.

**Table 1: Treatment setups with different lignins**

| Material | Temperature [°C] | Treatment Time [min] | Result |
|---|---|---|---|
| SWKL | 40 | 30 | Stabilized* |
| | | 60 | Stabilized* |
| | | 180 | Stabilized* |
| SWKL | 50 | 30 | Stabilized* |
| | | 60 | Stabilized* |
| | | 180 | Stabilized* |
| SWKL | 60 | 30 | Stabilized* |
| | | 60 | Stabilized* |
| | | 180 | Stabilized* |
| HWKL | 40 | 30 | Stabilized** |
| | | 60 | Stabilized** |
| | | 180 | Stabilized** |
| HWKL | 50 | 30 | Stabilized** |
| | | 60 | Stabilized** |
| | | 180 | Stabilized** |
| HWKL | 60 | 30 | Stabilized** |
| | | 60 | Stabilized** |
| | | 180 | Stabilized** |
| HWOL | 40 | 30 | Stabilized** |
| | | 60 | Stabilized** |
| | | 180 | Stabilized** |
| HWOL | 50 | 30 | Stabilized** |
| | | 60 | Stabilized** |
| | | 180 | Stabilized** |
| HWOL | 60 | 30 | Stabilized** |
| | | 60 | Stabilized** |
| | | 180 | Stabilized** |

| | | | |
|---|---|---|---|
| * For SWKL (soft wood kraft lignin) the non-meltable behavior is difficult to separate from the raw material behavior ** Stabilized mean: The powder shows no melting, sintering effect or changed morphology compared to the raw powder after the heat treatment up to 250°C | | | |

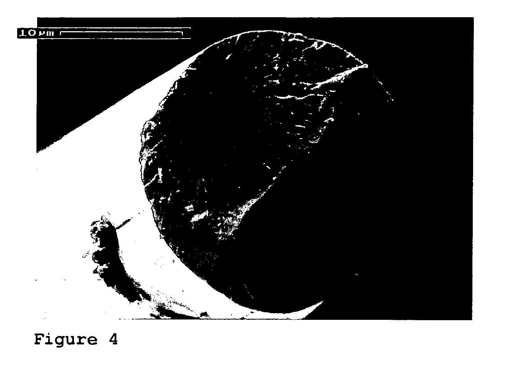

In conclusion all tested lignins could be stabilized, and are non-meltable. Figure 4 shows an example of a stabilized lignin fiber carbonization. Thus, a temperature of 40°C is sufficient during treatment with cyanurchloride for achieving stabilization. Lower reaction temperatures appear to be possible. In addition, a thermal treatment of 30 min is sufficient for achieving stabilization and may be optimized even to shorter periods, which is particularly useful for continuous fiber processing. Shorter periods of thermal treatment will result in more productivity during continuous running fiber processing.

Example 2: Stationary stabilization of melt-spun lignin fiber crosslinked with sodium-2-hydroxy-4,6-dichloro-1,3,5-triazine:
The received organosolv lignin was solved in acetone, precipitated in water, and dried in a vacuum furnace for 24h at room temperature, and then incubated at a temperature of 120°C for 4h to provide granulated lignin. The granulated lignin was molten in a piston spinning device and melt-spun to multifilament fibers with 30 filaments by a spinneret with 200 µm hole sizes. The fibers were wound as endless fibers on a bobbin with a winder speed of 150 m/min.

The (pre-)stabilization was performed by incubating a cut sample of the spun lignin fiber in a aqueous solution of sodium-2-hydroxy-4,6-dichloro-1,3,5-triazine at a concentration of 8% (w/v). The incubation conditions were 40°C and a reaction time of 30 min. Following the incubation the sample is washed by incubation with water. Then the lignin fiber was heat treated in air involving gradually increasing the temperature from room temperature to 250°C at a rate of 2 K/min.

The unmeltable stabilized precursor fiber from lignin is carbonized in a furnace by gradually increasing the temperature of the furnace from 250°C to 1200°C at a rate of 1-10 K/min, preferably 1-3 K/min under flowing nitrogen gas while the fiber is under tension.

The resulting carbon fiber sample has the following characteristics:

**Table 2:**

| Diameter [µm] | Tensile Strength [GPa] | Modulus [GPa] | Elongation [%] | Elementary Analysis C-H-O [%] |
|---|---|---|---|---|
| 15 | 0.37 | 18 | 1.3 | 92-4-4 |

### Example 3: Stationary stabilization of melt-spun lignin fibre crosslinked with 2-methoxy-4,6-dichloro-1,3,5-triazine:

The received organosolv lignin was solved in acetone, precipitated in water, and dried in a vacuum furnace for 24h at room temperature, and then incubated at a temperature of 120°C for 4h to provide granulated lignin. The granulated lignin was molten in a piston spinning device and melt-spun to multifilament fibers with 30 filaments by a spinneret with 200 µm hole sizes. The fibers were wound as endless fibers on a bobbin with a winder speed of 150 m/min.

The (pre-)stabilization was performed by incubating a cut sample of the spun lignin fiber in a aqueous solution of 2-methoxy-4,6-dichloro-1,3,5-triazine at a concentration of 8% (w/v). The incubation conditions were 40°C and a reaction time of 30 min. Following the incubation the sample is washed by incubation with water. Then the lignin fiber was thermally treated in air involving gradually increasing the temperature from room temperature to 250°C at a rate of 2 K/min.

The unmeltable stabilized precursor fiber from lignin is carbonized in a furnace by gradually increasing the temperature of the furnace from 250°C to 1200°C at a rate of 1-10 K/min, preferably 1-3 K/min under flowing nitrogen gas while the fiber is under tension.

The resulting carbon fiber sample has the following characteristics:

The resulting carbon fiber sample has following data:

**Table 3:**

| Diameter [µm] | Tensile Strength [GPa] | Modulus [GPa] | Elongation [%] | Elementary Analysis C-H-O [%] |
|---|---|---|---|---|
| 15 | 0.41 | 25 | 1.2 | 92-4-4 |

### Example 4: Salt-free conditions

In the Tab. 4 different stabilization methods are presented. Previous standard condition (8% 2-sodium-4,6-dichloro-1,3,5-triazine / 40°C for 1h in water/ heating from RT to 250°C with 2 K/min) was optimized with the intention of reducing NaCl salt formation. The best results involve the use of 8% 2,4-dichloro-6-methoxy-1,3,5-triazine/ 40°C for 1h in water/ heating from RT to 250°C with 2 K/min as set forth in trial 12/10. However, even the application of conditions allowing the formation of salts resulted in an efficient stabilization of the fibers.

**Table 4**

| Stabilization Trial No. / Precusor from Melt-SpiningTrial | Stabilization Procedure: Basic Chemistry/ Prestabilization conditions / Stabilization Conditions | Result of Stabilization from 1 (meltable) to 10 (perfect) | Comment |
|---|---|---|---|
| 1/3 (300 um) | 8% 2-sodium-4,6-dichloro-1,3,5-triazine / 40°C for 1h in water/ heating from RT to 250°C with 2 K/min | 8 | Standard conditions |
| 2/4 (250 um) | 8% 2-sodium-4,6-dichloro-1,3,5-triazine / 40°C for 1h in water/ heating from RT to 250°C with 2 K/min | 8 | Standard conditions |
| 3-5/5 (200 um) | 8% 2-sodium-4,6-dichloro-1,3,5-triazine / 40°C for 1h in water/ heating from RT to 250°C with 2 K/min | 8 | Standard conditions |
| 6/8 | 1%-4% 2-sodium-4,6-dichloro-1,3,5-triazine/ 40°C for 1h in water/ heating from RT to 250°C with 2 K/min | 4 | Unstable results, unsmooth surfaces |
| 7/9 | 4% 2-sodium-4,6-dichloro-1,3,5-triazine/ 30°-60°C for 1h in water/ heating from RT to 250°C with 2 K/min | 4 | Bad results in case of temperatures above Tg |
| 8/10 | Tetra Carbonic Acid / 40°C for 1h in water/ heating from RT to 250°C with 2 K/min | 1 | Melting before reaching self-crosslinking of lignin |
| 9/10 | Formaldehyde/ 40°C for 1h in water/ heating from RT to 250°C with 2 K/min | 3 | Some filaments unmolten, but most molten |
| 10/10 | Glutaraldehyde/ 40°C for 1h in water/ heating from RT to 250°C with 2 K/min | 1 | Melting before reaching self-crosslinking of lignin |
| 11/10 | Glyoxal/ 40°C for 1h in water/ heating from RT to 250°C with 2 K/min | 1 | Melting before reaching self-crosslinking of lignin |
| 12/10 | 8% 2,4-dichloro-6-methoxy-1,3,5-triazine/ 40°C for 1h in water/ heating from RT to 250°C with 2 K/min | 8 | Salt-free variant of standard conditions, but at least 8% in solution necessary |
| 13/10 | 8% 2-sodium-4,6-dichloro-1,3,5-triazine with ammonia to pH10 / 40°C for 1h in water/ heating from RT to 250°C with 2 K/min | 1 | Precursor solves partially and slowly in solution |
| 14/10 | Formaldehyde/ 40°C for 1h in water with ammonia/ heating from RT to 250°C with 2 K/min | 1 | Melting before reaching self-crosslinking of lignin |
| 15/10 | Formaldehyde/ 40°C for 1h in water with HCl to pH 1 / heating from RT to 250°C with 2 K/min | 8 | Stable Conditions, salt-free method |
| 16/10 | Formaldehyde/ 40°C for 1h in water with NaOH to pH 10 / heating from RT to 250°C with 2 K/min | 1 | Precursor solves completely in solution |

### Example 5: Rheological analysis of the effect cyanurchloride crosslinking on lignin in molten and solubilized HWOL

The use of molten HWOL mixed with 1 weight-% of cyanurchloride in the sample chamber of the used rheometer at the melting temperature resulted in an extremely fast crosslinking reaction. Thus, a rheological analysis of the sample could not be performed.

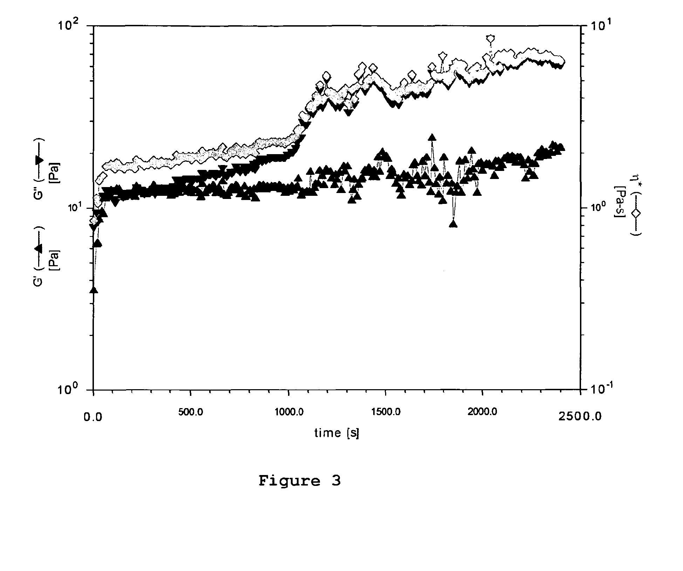

Instead, a solution of 50 weight % HWOL in acetone was prepared, conditioned at 40°C under stirring. A cyanurchloride solution in acetone was injected. The final HWOL sample contained 5 weight-% cyanurchloride. Immediately after mixing the solution was measured in a time sweep rheological test at 40°C with a constant shear ratio. The results are presented in figure 3: After an initial slow increase of viscosity effected by polymer chain linking, a steep increase of viscosity was observed. At this point, the crosslinked lignin polymer forms particles in dispersion, associated with a strong increase in viscosity was seen in the course of the experiment.

### Example 5: Evaluation of manufacturing parameter range

The stabilization and carbonization steps were basically performed as in Example 3. Five parameters were tested, concentration of 2,4-dichloro-6-methoxy-1,3,5-triazine (P1), the length of the first thermal treatment (P2), the stability of 2,4-dichloro-6-methoxy-1,3,5-triazine in relation to temperature (P3), the temperature of the first thermal treatment step (P4), and the temperature at which the drying of the stabilized lignin is performed.

P1 was tested first. The length of the first thermal treatment was 30 min, incubation was performed at 4°C, the first thermal treatment step and the drying was performed at 40°C.

The melting behavior/stabilization by crosslinking was analyzed in a temperature range of 100-250°C and integrated into the production process of the precursor-fibers. If no melting and no sticking together of the fibers was observed at those temperatures, the precursor fibers were considered to be suitable for carbonization and the process continued. It was observed that a concentration of the crosslinker of 8-10% yielded optimal stabilization with the temperature of the first thermal treatment being in the range of 25°C to 40°C.

P2 can be tested as follows. P1 was 8% and the conditions with the exception of P2 were as in the experiments relating to P1.

**Table 5**

| Time (min) | 15 | 30 | 45 |
|---|---|---|---|
| Melting behavior | Not tested | No melting | Not tested |

Only 30 min was tested and yielded excellent stabilization results. It is expected that shorter and longer times will also provide sufficient or excellent stabilization.

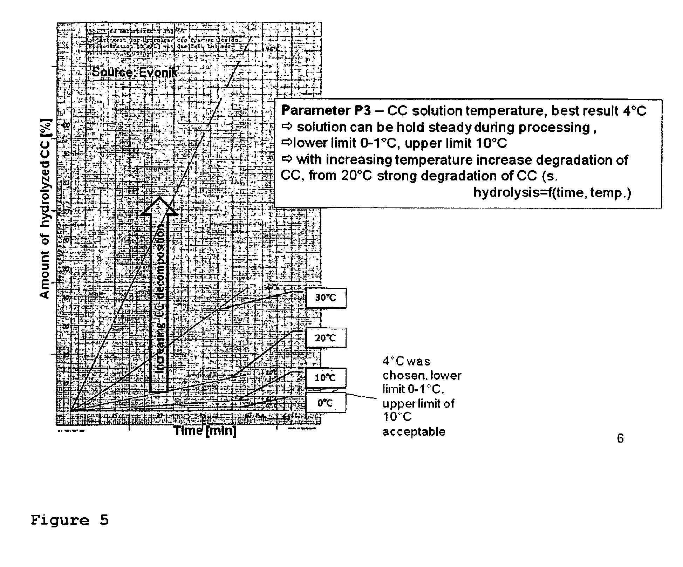

The stability of the 2,4-dichloro-6-methoxy-1,3,5-triazine was tested in relation to temperature and time (P3). The read out was based on the amount of hydrolyzed 2,4-dichloro-6-methoxy-1,3,5-triazine. As can be seen from figure 5 the decomposition is within an acceptable range at values between 0°C and 10°C (P3).

P4 was tested with P1 being 8%, and P2, P3 and P5 being as in the experiment in relation to P1.

**Table 6**

| Temperature (°C) | 20°C | 40°C | 60°C |
|---|---|---|---|
| Melting behavior | No melting | No melting | No melting |

As can be seen the stabilization effect can be observed over a range of 20°C to 40°C.

P5 was tested with P1 being 8%, and P2, P3 and P4 being as in the experiment in relation to P1. The drying step was inserted after the first thermal treatment step. In general, the upper limit is expected to be the glass transition temperature of lignin at about 60°C.

**Table 7**

| Temperature (°C) | 40°C | 50°C | 60°C |
|---|---|---|---|
| Melting behavior | No melting | No melting | No melting |

As can be seen the stabilization effect can be observed over a range of 30°C to 50°C can be seen the stabilization effect can be observed over a range of 20°C to 40°C.

## Claims

1. Method for stabilizing lignin fibers comprising
a. When using unspun lignin as starting material
i. Incubating a solution of unspun lignin with a crosslinker at a temperature where no crosslinking occurs
ii. Spinning lignin fibers from the solution
iii. thermally treating the obtained fibers in a first thermal treatment step at a constant temperature said temperature allowing crosslinking of lignin with the crosslinker
iv. Thereby obtaining a stabilized lignin fiber;
b. When using lignin fibers as starting material
i. Providing a fiber of lignin
ii. Incubating the fiber of lignin with a solution comprising a crosslinker at a temperature where no crosslinking occurs
iii. thermally treating the obtained fibers in a first thermal treatment step at a constant temperature said temperature allowing crosslinking of lignin with the crosslinker
iv. Thereby obtaining a stabilized lignin fiber.

2. Method according to claim 1, comprising a further step
v. thermally treating the fibers in a second thermal treatment step by gradually increasing the temperature to temperature between 240°C and 260°C.

3. Method according to any of the above claims, wherein the crosslinker is selected from the group consisting of
a) a molecule having formula I 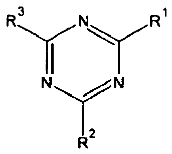 wherein R¹ and R² are independently selected from the group consisting of Cl, Br, and F;
wherein R³ renders the molecule water soluble;
b) formaldehyde;
c) isocyanate;
d) hexamethylene diisocyanate;
and
e) hexamethoxymethylmelamine;

4. Method according to claim 3, wherein the crosslinker has formula 1 and R³ is selected from the group consisting of Cl, Br, F, Na, OH, H (CH₂0)ₙ, H(C₂H₄O)ₙ, with n from 1 to 10, preferably 1.

5. Method according to claim 4, wherein R¹ and R² are Cl, and wherein R³ is Cl, H(CH₂0)ₙ, or H(C₂H₄O)ₙ, with n from 1 to 10, preferably 1.

6. Method according to claim 1a, wherein the crosslinker has a concentration of between 0.01% and 10%, 0.05% and 5%, 0.075% and 1.25%, 0.1% and 1.0% or 0.5 % during the incubation step i.

7. Method according to claim 1b, wherein the crosslinker has a concentration of between 6.5% and 11%, 7.5% and 10%, 8% and 10%, or of 8 % during the incubation step ii.

8. Method according to any of the above claims, wherein the incubation step is performed at a temperature of between 0°C and 20°C, 0°C and 15°, 0°C and 10°C, 1°C and 8°C, 2°C and 6°C, 3° and 5°C, or at a temperature of 4°C.

9. Method according to any of the above claims, wherein the first thermal treatment step is performed at a temperature of between 20°C and 60°C, 30°C and 50°C, 35° and 45 °C, or at 40°C.

10. Method according to any of the above claims, wherein the first thermal step is performed for between 10 and 60 min, 15 and 50 min, 20 and 40 min, or for 30 min.

11. Method according to any of the above claims, wherein the first thermal treatment step is performed under salt free conditions.

12. Method according to any of the above claims, wherein the first thermal treatment step is followed by a drying step or the first thermal treatment step is performed concurrently with a drying step.

13. Method according to any of the above claims wherein the lignin of the starting material is prepared by the sulfite-, sulfate-, soda- or organosolv method.

14. The method according to any of claims 2-13, wherein in the second thermal treatment step the temperature is raised at a rate of 1-5K/min and subsequently maintained at a temperature of 240° to 260°C for 30 min to 90 min, 50 min to 70 min, or 60 min.

15. Method according to the any of claims 2-14, further comprising the carbonization of the stabilized lignin fibers.

16. Prestabilized lignin fiber obtainable by any of the methods 1-14.

## Patentansprüche

1. Verfahren zum Stabilisieren von Ligninfasern umfassend
a. Bei Verwendung nicht versponnen Lignins als Ausgangsmaterial
i. Inkubieren einer Lösung nicht versponnen Lignins mit einem Quervernetzer bei einer Temperatur, bei der sich keine Quervernetzung ereignet
ii.Verspinnen von Ligninfasern aus der Lösung
iii. Thermale Behandlung der erhaltenen Fasern in einem ersten thermalen Behandlungsschritt bei einer konstanten Temperatur, wobei die Temperatur das Quervernetzen von Lignin mit dem Quervernetzer ermöglicht
iv. Dadurch Erhalten einer stabilisierten Ligninfaser;
b. Bei Verwendung von Ligninfasern als Ausgangsmaterial
i. Bereitstellen einer Ligninfaser
ii. Inkubieren der Ligninfaser mit einer Lösung umfassend einen Quervernetzer bei einer Temperatur, bei der sich keine Quervernetzung ereignet
iii. Thermale Behandlung der erhaltenen Fasern in einem ersten thermalen Behandlungsschritt bei einer konstanten Temperatur, wobei die Temperatur das Quervernetzen von Lignin mit dem Quervernetzer ermöglicht
iv. Dadurch Erhalten einer stabilisierten Ligninfaser.

2. Verfahren gemäß Anspruch 1, umfassend einen weiteren Schritt
v. Thermale Behandlung der Fasern in einem zweiten thermalen Behandlungsschritt, bei dem die Temperatur graduell auf eine Temperatur zwischen 240°C und 260°C erhöht wird.

3. Verfahren gemäß einem der vorstehenden Ansprüche, wobei der Quervernetzer ausgewählt ist aus der Gruppe bestehend aus
a) ein Molekül mit der Formel I 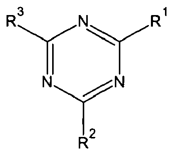 wobei R¹ und R² unabhängig ausgewählt sind aus der Gruppe bestehend aus Cl, Br, and F;
wobei R³ das Molekül wasserlöslich macht;
b) Formaldehyd;
c) Isocyanat;
d) Hexamethylendiisocyanat;
und
e) Hexamethoxymethylmelamine;

4. Verfahren gemäß Anspruch 3, wobei der Quervernetzer der Formel I entspricht und R³ ausgewählt ist aus der Gruppe bestehend aus Cl, Br, F, Na, OH, H(CH₂O)ₙ, H(C₂H₄O)ₙ, mit n gleich 1 bis 10, vorzugsweise 1.

5. Verfahren gemäß Anspruch 4, wobei R¹ und R² Cl sind, und wobei R³ Cl, H(CH₂O)ₙ, oder H(C₂H₄O)ₙ ist, mit n gleich 1 bis 10, vorzugsweise 1.

6. Verfahren gemäß Anspruch la, wobei der Quervernetzer eine Konzentration von zwischen 0.01% und 10%, 0.05% und 5%, 0.075% und 1.25%, 0.1% und 1.0% oder 0.5 % während des Inkubationsschrittes i besitzt.

7. Verfahren gemäß Anspruch 1b, wobei der Quervernetzer eine Konzentration von zwischen 6.5% und 11%, 7.5% und 10%, 8% und 10%, oder von 8 % während des Inkubationsschrittes ii besitzt.

8. Verfahren gemäß einem der vorstehenden Ansprüche, wobei der Inkubationsschritt bei einer Temperatur von zwischen 0°C und 20°C, 0°C und 15°, 0°C und 10°C, 1°C und 8°C, 2°C und 6°C, 3° und 5°C, oder bei einer Temperatur von 4°C durchgeführt wird.

9. Verfahren gemäß einem der vorstehenden Ansprüche, wobei der erste thermale Behandlungsschritt bei einer Temperatur von zwischen 20°C und 60°C, 30°C und 50°C, 35° und 45 °C, oder bei 40°C durchgeführt wird.

10. Verfahren gemäß einem der vorstehenden Ansprüche, wobei der erste thermale Behandlungsschritt zwischen 10 und 60 min, 15 und 50 min, 20 und 40 min, oder für 30 min durchgeführt wird.

11. Verfahren gemäß einem der vorstehenden Ansprüche, wobei der erste thermale Behandlungsschritt unter salzfreien Bedingungen durchgeführt wird.

12. Verfahren gemäß einem der vorstehenden Ansprüche, wobei auf den ersten thermalen Behandlungsschritt ein Trocknungsschritt folgt oder der erste thermale Behandlungsschritt gleichzeitig mit einem Trocknungsschritt durchgeführt wird.

13. Verfahren gemäß einem der vorstehenden Ansprüche, wobei das Lignin des Ausgangsmaterials mit dem Sulfit-, Sulfat-, Soda- oder Organosolv Verfahren hergestellt ist.

14. Verfahren gemäß einem der Ansprüche 2-13, wobei in dem zweiten thermalen Behandlungsschritt die Temperatur mit einer Rate von 1-5K/min erhöht wird und nachfolgend die Temperatur bei 240° bis 260°C für 30 min bis 90 min, 50 min bis 70 min, oder 60 min konstant gehalten wird.

15. Verfahren gemäß einem der Ansprüche 2-14, ferner umfassend die Karbonisierung der stabilisierten Ligninfasern.

16. Vorstabilisierte Ligninfasern erhältlich gemäß einem der Verfahren der Ansprüche 1-14.

## Revendications

1. Procédé destiné à stabiliser des fibres de lignine, comprenant
a. Lors d'une utilisation de lignine non filée comme matériau de départ
i. Incubation d'une solution de lignine non filée avec un agent de réticulation à une température où ne se produit aucune réticulation
ii. Filage de fibres de lignine à partir de la solution
iii. Traitement thermique des fibres obtenues dans une première étape de traitement thermique à une température constante, ladite température permettant une réticulation de lignine avec l'agent de réticulation
iv. Obtention de ce fait d'une fibre de lignine stabilisée ;
b. Lors d'une utilisation de fibres de lignine comme matériau de départ
i. Fourniture d'une fibre de lignine
ii. Incubation de la fibre de lignine avec une solution comprenant un agent de réticulation à une température où ne se produit aucune réticulation
iii. Traitement thermique des fibres obtenues dans une première étape de traitement thermique à une température constante, ladite température permettant une réticulation de lignine avec l'agent de réticulation
iv. Obtention de ce fait d'une fibre de lignine stabilisée.

2. Procédé selon la revendication 1, comprenant une autre étape
v. traitement thermique des fibres dans une deuxième étape de traitement thermique en augmentant graduellement la température à une température entre 240°C et 260°C.

3. Procédé selon l'une quelconque des revendications précédentes, dans lequel l'agent de réticulation est choisi parmi le groupe constitué par
a) une molécule ayant la formule 1 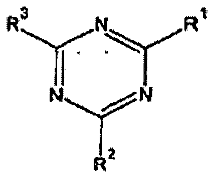 dans laquelle R¹ et R² sont choisis de façon indépendante parmi le groupe constitué par Cl, Br, et F;
dans laquelle R³ rend la molécule soluble dans l'eau ;
b) formaldéhyde ;
c) isocyanate ;
d) diisocyanate d'hexaméthylène ;
et
e) hexaméthoxyméthylmélamine.

4. Procédé selon la revendication 3, dans lequel l'agent de réticulation a la formule 1 et R³ est choisi parmi le groupe constitué par Cl, Br, F, Na, OH, H(CH₂O)ₙ, ou H(C₂H₄O)ₙ, avec n de 1 à 10, de préférence 1.

5. Procédé selon la revendication 4, dans lequel R¹ et R² sont Cl, et dans lequel R³ est Cl, H(CH₂O)ₙ, ou H(C₂H₄O)ₙ, avec n de 1 à 10, de préférence 1.

6. Procédé selon la revendication la, dans lequel l'agent de réticulation présente une concentration comprise entre 0,01% et 10%, 0,05% et 5%, 0,075% et 1,25%, 0,1% et 1,0% ou une concentration de 0,5% au cours de l'étape d'incubation i.

7. Procédé selon la revendication 1b, dans lequel l'agent de réticulation présente une concentration comprise entre 6,5% et 11%, 7,5% et 10%, 8% et 10%, ou une concentration de 8% au cours de l'étape d'incubation ii.

8. Procédé selon l'une quelconque des revendications précédentes, dans lequel l'étape d'incubation est effectuée à une température comprise entre 0°C et 20°C, 0°C et 15°C, 0°C et 10°C, 1°C et 8°C, 2°C et 6°C, 3°C et 5°C, ou à une température de 4°C.

9. Procédé selon l'une quelconque des revendications précédentes, dans lequel la première étape de traitement thermique est effectuée à une température comprise entre 20°C et 60°C, 30°C et 50°C, 35°C et 45°C, ou à 40°C.

10. Procédé selon l'une quelconque des revendications précédentes, dans lequel la première étape thermique est effectuée pendant 10 à 60 min, 1 à 50 min, 20 à 40 min, ou pendant 30 min.

11. Procédé selon l'une quelconque des revendications précédentes, dans lequel la première étape de traitement thermique est effectuée dans des conditions exemptes de sel.

12. Procédé selon l'une quelconque des revendications précédentes, dans lequel la première étape de traitement thermique est suivie d'une étape de séchage ou la première étape de traitement thermique est effectuée en même temps qu'une étape de séchage.

13. Procédé selon l'une quelconque des revendications précédentes, dans lequel la lignine du matériau de départ est préparée par le procédé au sulfite, au sulfate, à la soude ou le procédé Organosolv.

14. Procédé selon l'une quelconque des revendications 2-13, dans lequel dans la deuxième étape de traitement thermique la température est augmentée à une vitesse de 1-5 K/min et est ensuite maintenue à une température de 240°C à 260°C pendant 30 min à 90 min, 50 min à 70 min, ou 60 min.

15. Procédé selon l'une quelconque des revendications 2-14, comprenant en outre la carbonisation des fibres de lignine stabilisées.

16. Fibre de lignine pré-stabilisée susceptible d'être obtenue par l'un quelconque des procédés des revendications 1-14.
